# EUROPEAN PATENT APPLICATION

(11) **EP 2 760 160 A1**
(43) Date of publication of application: **30.07.2014**
(21) Application number: 13305091.4
(22) Date of filing: 25.01.2013
(51) Int. Cl.: H04L 12/24, H04L 29/08

(54) **Provision of adapted information on a topology of a communication network**

(71) Applicant: Alcatel Lucent, 75007 Paris (FR)
(72) Inventor: Scharf, Michael, 70435 Stuttgart (DE); Voith, Thomas, 70806 Kornwestheim (DE); Schuhmacher, Samuel F., 70771 Leinfelden-Echterdingen (DE)
(74) Representative: 2SPL Patentanwälte PartG mbB

(57) **Abstract**

Embodiments relate to a network topology analyzer (20) for providing required information on a topology of a communication network (32), comprising a network input interface (22) operable to receive topological network information related to a characteristic of a communication within the communication network (32). A user input interface (24) is operable to receive a user preference information, the user preference information being indicative of a topology representation requested by the user and an analyzer (26) operable to provide the required information on the topology of the network, the analyzer (26) being operable to process the topological network information based on the user preference information.

## Description

Embodiments of the present invention relate to an apparatus and a method for providing required information on a topology of a communication network.

### Background

Knowledge on a topology of a communication network, such as for example a local area network (LAN), a wide area network (WAN), a backhaul network of a mobile communication system or the like, is often beneficial or even required in order to be able to provide services over the network with high quality. In that sense, the topology of a network is, generally-speaking, the knowledge on particular communication or transmission characteristics of the whole network, i.e., knowledge on individual network nodes and on characteristics of a link or connection between particular nodes. Examples for characteristics of a link between two connected nodes are available bandwidth between the nodes, the delay of a communication between the nodes, the reliability of the communication between the nodes, or the like.

One particular example where knowledge on the topology of a network is desirable is a content delivery network (CDN). A CDN consists of a distributed set of caches where content to be delivered is stored. In order to provide the service with good quality, it is desirable to serve particular user requests from caches which are close to the issuer of the request in order to improve the end user performance and to save network resources. To this end, close may be understood to be close with respect to the topology of the network, that is, not necessarily geographically close. In order to achieve this, a CDN typically embodies a routing and load-balancing function. In order for this function to work properly and select caches in a reasonable way, this function requires knowledge on the network topology of the communication network used to deliver the content. For example, the selection of a particular cache out of a set of caches for a given request may benefit from insight how well these different caches are connected to the requesting user in terms of bandwidth.

Another service that benefits from knowledge on required information on a topology of a communication network is a distributed cloud system. A cloud system offering or using more than one data center simultaneously has to consider similar problems as content delivery networks. Accessing cloud resources typically benefits from high bandwidth and low latencies. Therefore, a distributed cloud system, such as, for example, a carrier cloud, needs also an understanding how well data centers are connected to potential users. In other words, both of those services require network-aware routing and placement of resources, which, in turn, requires an abstract view on the network topology, that is, knowledge on a required information on a topology of a communication network.

In order to provide users with knowledge of a topology of a communication network, network topology exposure interfaces may be used. These may either be custom or complying to a standard, such as, for example, the Application-Layer Traffic Optimized (ALTO) interface, which is standardized by the Internet Engineering Taskforce (IETF). A network provider may, for example, offer one or more ALTO servers, each providing a certain predetermined view of the network and expose this view to the outside world. ALTO servers may, in return, be queried by ALTO clients which may be part of a CDN or a cloud management system. The ALTO server may export the network topology, that is, the information on a topology of a communication network, in the form of maps or graphs. In order to realize a certain amount of abstraction, the topology may be represented using a set of identifiers, called "PIDs". A mapping of network addresses to PIDs may also be called a "network map" and the connectivity between those identifiers (PIDs) may be encoded in a "cost map" that is, in a map containing information on a characteristic of a communication between the particular nodes or PIDs. The input data required for those maps is statically configured, that is, the information on the topology of the communication network as provided by common ALTO servers is static while the evaluation of the static configuration may eventually be updated regularly by accessing topological network information to generate an updated representation of the topology of the communication network. Such topological network information may be obtained from network management systems, route analytics software or by directly listening to routing protocols, such as, for example, BGP, OSPF, IS-IS, etc.

While network topology exposure interfaces may be available, different use cases or applications may require different views on the network in order to fit their needs as good as possible, that is different information on or representations of the topology of a communication network may be required by different applications. Using standard interfaces may therefore lack the provision of the information as particularly required by a requesting user or, to the contrary, provide too much information. In the latter case, a user would have to evaluate the provided information on the topology of a network so as to conclude about the characteristics he is actually interested in using a possibly complex and computationally expensive process.

Therefore, there is a desire to provide for a better way for providing information on a topology of a communication network.

### Summary

According to some embodiments of the present invention, this is achieved by a network topology analyzer for providing required information on a topology of a communication network, wherein the network topology analyzer comprises a network input interface operable to receive topological network information related to a characteristic of a communication within the communication network. The network topology analyzer further comprises a user input interface operable to receive a user preference information, the user preference information being indicative of a topology representation requested by the user, wherein an analyzer is operable to provide the required information on the topology of the network while processing the topological network information based on the user preference information. That is, the network topology analyzer does not only have a network input interface so as to receive topological network information to be processed or to be exposed to users but also a user input interface so as to enable a user to provide user preference information having information of a particular topology representation requested by the user. That is, the user is able to influence the output of the content, i.e. the representation of the topology as provided by the network topology analyzer.

Therefore, a user may influence the generation of the representation of a topology of a communication network so that a user may receive only the required information, avoiding costly computations on the user side. Some implementations may only become feasible when a network topology analyzer according to some embodiments of the present invention is used, in that this may provide for the possibility of having information within the generated or output required information on the topology of the network which is not included in standard-views of the network at all. To achieve this, a user may influence the generation of the required information on a topology of a communication network in an arbitrary manner by providing user preference information.

According to some exemplary embodiments, the network topology analyzer is operable to process the topological network information as received, e.g. directly from the network, using a processing pipeline. That is, a pipeline comprising two or more modules performing calculations or manipulations/transformations of the topological network information one after the other may be used. To this end, each module is configured to receive topological network information in a predetermined format at the input of the module and to provide topological network information in said predetermined format at an output of the module so that an order of the modules within the pipeline can be changed easily. That is, a pipeline consisting of at least a first and a second module may be configured by a user in that the user preference information comprises information on a requested order of the first module and the second module within the pipeline. Such, different modules and their processing order within a processing pipeline can be specified by the user preference information so as to achieve a representation of a topology of the communication network as required by the particular user.

According to some embodiments of the present invention, a network topology analyzer is capable of receiving user preference information of different users or using different sets of user preference information from a single user so as to provide differing sets of information on a topology of a communication network, i.e. different representations of a network topology at its output. The analyzer of some exemplary embodiments of the network topology analyzer is operable to process the topological network information within a processing pipeline additionally comprising at least a third module, wherein the pipeline may be constructed or operated such that a topological network information is provided from an output of the first module to both, an input of the second module and an input of the third module. That is, "forking" may be employed, which is the sharing of the output information of one particular module by at least two or even more modules within the pipeline. This may provide for an extremely efficient configurable pipeline where individual processing steps have to be performed only once when the shared processing steps are configured such that they are distributed to different subsequent modules within the pipeline.

Generally speaking, according to some exemplary embodiments of the present invention, the user preference information may comprise instructions which cause a particularly requested processing of the topological network information by the analyzer. According to some particular embodiments of the present invention, the instructions comprised within the user preference information may define scripts to be executed by the analyzer, the scripts defining a particular processing of the topological network information, e.g. particular filtering characteristics or the like.

According to further embodiments, the instructions may contain or provide information on a selection of one of several predetermined processing schemes, e.g. different filtering algorithms used to transform or process topological network information or an intermediate representation of a topology of a communication network. Apart from a simple selection of predetermined processing schemes, the instructions may additionally or alternatively also provide or include at least one configuration parameter for a particular processing scheme, such as, for example a parameter indicating a minimum bandwidth desirable for a communication between two nodes, so that a representation of the topology of the communication network as provided by the analyzer may not illustrate or contain information on network nodes which are only capable of communicating with a lower bandwidth. Of course, this is just an illustrative example, whereas a configuration parameter according to further embodiments of the present invention may be any arbitrary parameter related to a particular quantity, a characteristic of a communication between nodes of the underlying network or, generally speaking, influencing a processing scheme of topological network information by the analyzer.

Generally speaking, topological network information comprises information on at least two nodes communicating with each other within a particular representation of the communication network as well as information on at least one characteristic of the communication between the nodes. It is to be noted that a node as understood herein with respect to a representation of a topology of a network does not necessarily refer to an individual single device, such as to a router, a computing node or the like. A node shall be understood to be a representation of any network entity or group of entities which are capable of communicating with each other. In particular, a node may, therefore, represent a complete subnet, a sub-segment of a network, the complete network of one particular provider or any arbitrary or intermediate size group of entities within the network. The communication between the nodes is characterized by at least one characteristic, as, for example, a bandwidth available for the communication between the nodes, a delay caused by the communication between the particular nodes, a physical distance between the nodes and/or a cost or routing cost related to communication between the nodes.

It goes without saying that also further properties of communication shall be understood to be a characteristic of communication between the nodes in the context of the present specification. Therefore, any arbitrary other characteristic may be considered as a characteristic for a communication between the nodes, such as, for example, the reliability of the communication between the nodes, which is, for example, a packet loss probability. Another example for a characteristic for a communication between two nodes is a resilience of the communication between the nodes, that is, for example, the level of data protection available or the availability of restoration or recovery schemes in case of packet losses. Furthermore, it is explicitly noted that a characteristic of a communication between the nodes does not necessarily relate to only one single quantity. On the contrary, a characteristic of a communication between the nodes may be derived by any arbitrary metric from a combination of two or more characteristic quantities or "raw" values, which may directly relate to a physical or measurable quantity. An example for "raw" values in that sense is an achievable bandwidth in MBit/s and a packet loss probability in percent, which may for example, be combined by a weighted sum of the two "raw" values or by using any other possible metric to combine the values in order to provide a possible characteristic of a communication between two nodes. Also, individual "raw" values may be normalized in order to represent the characteristic of the communication between the nodes or the like. For example, delay values may be normalized to represent a percentage of the maximum delay occurring within the network, while the normalized delay values are further used as a characteristic of a communication as understood herein.

According to further embodiments of the present invention, the network input interface is operable to continuously receive topological network information from the network in order to enable the analyzer to provide the required information continuously and to appropriately account for dynamic changes within the network. To this end, a user of a network topology analyzer according to some embodiments of the present invention may respond immediately to a changing network configuration or performance, which may, for example, be caused by a loss of individual nodes or network segments.

According to some embodiments of the present invention, the network topology analyzer furthermore comprises a representation generator in order to be able to provide a graphical representation of the required information on a topology of a communication network. The graphical representation may comprise symbols for at least two nodes communicating with each other in a particular representation of the communication network as well as a graphical representation of a communication link between said two nodes, which may, for example, be a solid line connecting the two nodes in the graphical representation.

This may serve to enable a user to more efficiently gather an overview of the requested representation of the topology of the communication network, while the required information on the topology of a communication network as provided by the embodiments of the network topology analyzer is, of course, not limited to a graphical representation only. More generally, a network topology analyzer may use arbitrary representations, formats or numerical values in order to provide the required information on a topology of a communication network. In particular, the required information on the topology of a communication network may, for example, be provided so as to be compliant to the ALTO standard.

According to further embodiments of the present invention, the network topology analyzer furthermore comprises a policy checker operable to evaluate the user preference information and/or the requested topology representation with respect to a policy. The policy indicates allowable information within a representation of the topology of the communication network as provided by the analyzer. To this end, the policy checker prevents information which is, according to the policy applied, not allowed to be contained within the representation, from being included into the information on the topology of the communication network as output by the analyzer.

This may allow to additionally consider security constraints of the network providers. For many network providers, the exposure of details regarding the internal network topology raises privacy concerns. To this end, it may be desirable that third parties or users only have access to an abstract view of the topology which focuses on the relevant data. This, in turn, can be achieved by the policy checker. A policy may therefore relate to security constraints in some embodiments, while in other embodiments a policy may additionally or alternatively also relate to other rules that should be enforced, such as, for example, a size limit for a provided topology representation. To this end, the term policy relates to one or more rules that shall be enforced. The definition of a policy or their associated rules may be performed in any possible way, e.g. by explicitly defining the content or information which is allowable or by explicitly defining what content or information is not allowable, which is also referred to as "whitelisting" and "blacklisting" in some similar technical applications.

Apart from that, the full configuration data of a network may be too detailed, too complex and/or too sensitive to be useful for applications. It may additionally be noted that even when security issues are of little concern, when for example, a network provider itself offers CDN services or the like, the level-of-detail and granularity of information needed or required may be adjusted to fit the use case offered by the network provider as a service according to embodiments of the present invention. This adjustment may be performed by a skilled user using appropriate user preferences or, eventually only partly, by the provider of the network by security policies.

Some embodiments comprise a digital control circuit installed within the apparatus for performing the method. Such a digital control circuit, e.g. a digital signal processor (DSP), needs to be programmed accordingly. Hence, yet further embodiments also provide a computer program having a program code for performing embodiments of the method, when the computer program is executed on a computer or a digital processor.

### Brief description of the Figures

Some embodiments of apparatuses and/or methods will be described in the following by way of example only, and with reference to the accompanying Figs., in which
Fig. 1 illustrates a graphical representation of a topology of a communication network;
Fig. 2 shows a schematic illustration of an embodiment of a network topology analyzer for providing required information on a topology of a communication network;
Fig. 3 illustrates pipeline-processing used in an analyzer according to some embodiments of a network topology analyzer;
Fig. 4 illustrates a particular embodiment of an analysis pipeline;
Fig. 5 illustrates an example as to how topological information may be received or stored in an embodiment of the present invention;
Fig. 6 shows an example as to how programmability may be achieved;
Fig. 7 shows an illustration showing how programmability of a module of a pipeline may be achieved;
Fig. 8 illustrates in a more detailed view the possibility of implementing user-defined scripts and ways as to how a policy check may be performed;
Fig. 9 illustrates a processing step according to some embodiments of the present invention in a message-sequence-chart; and
Fig. 10 shows a schematic view of a flowchart illustrating a particular embodiment of a method.

### Description of Embodiments

Various exemplary embodiments will now be described with reference to the accompanying drawings. In the Figs., the thicknesses of lines, layers and/or regions may be exaggerated for clarity.

It should be understood, however, that there is no intent to limit further embodiments to the particular forms disclosed, but on the contrary, further embodiments are to cover all modifications, equivalents, and alternatives falling within the scope of the invention. Like numbers refer to like or similar elements throughout the description of the Fig.s.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of further embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which the exemplary embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

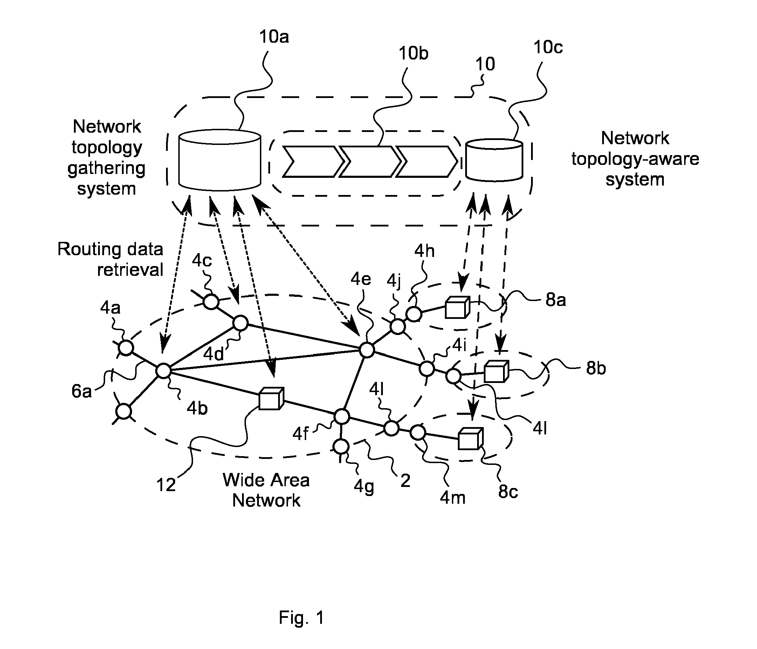

In the illustration of Fig. 1 the topology of the network 2 is illustrated as a graph comprising nodes 4a, 4b, etc., the nodes communicating with each other, as, for example, illustrated by a solid line representing a communication link 6a. The communication link 6a is characterized by at least one characteristic of the communication between the nodes 4a and 4b. Fig. 1 furthermore illustrates an example of three applications 8a to 8c which require information on the topology of the network 2 in order to perform their services. To provide such information, a network topology processing system 10 is illustrated in Fig. 1, comprising a network input interface 10a operable to receive topological network information related to a characteristic of a communication within the communication network. To this end, the network input interface 10a may, for example, retrieve the topological network information or the topology data from the network devices or the nodes 4a to 4m directly or, alternatively or additionally, utilize network monitoring devices, as for example the network monitoring device 12. The network topology analyzer 10 furthermore comprises an analyzer 10b in order to process or transform the received topological network information and to provide information on the topology of the network via an output interface 10c of the topology analyzer 10 which may be accessed by the network topology aware applications 8a to 8c.

In other words, Fig. 1 gives a high-level overview of a topology of a communications network and associated topology processing. It depicts a network topology exposure system. Its first important component is a data gathering component, which retrieves network topology data from the network devices, e. g., routers or routing protocol monitors. This can be, for instance, a network management system, or route analytics software. A graph processing pipeline that processes the topology data is illustrated in Fig. 1, so that it can be exported to and used by a network-aware application. Examples for such a network topology-aware system are CDNs or distributed clouds. For the invention is not relevant how the information is internally distributed by a user of the topology processing pipeline.

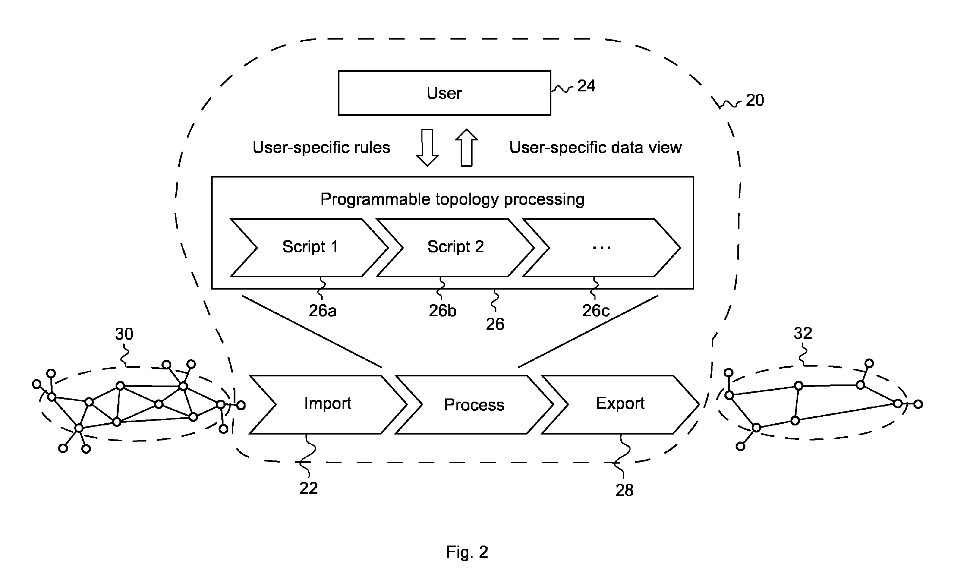

While Fig. 1 illustrates a network environment and the associated network nodes and communication links between the network nodes used to represent a topology of a communication network schematically, an embodiment of an inventive network topology analyzer suitable to operate on a network topology as illustrated in Fig. 1 is shown in Fig. 2.

An embodiment of a network topology analyzer 20 comprises a network input interface 22, a user input interface 24 and an analyzer 26. The network input interface 22 is operable to receive topological network information related to a characteristic of a communication within the communication network, for example according to the techniques described above with respect to the input interface 10a of Fig. 1. To this end, the input interface 22 may, for example, receive topological network information related to the representation of topology 30 illustrated on the left-hand side of Fig. 2. Topological network information may, for example, also be denoted as a graph, the terminology representing the illustration of the network as used herein, wherein individual nodes are connected by straight lines in order to signal that the two nodes connected by a line are communicating directly with each other in the particular representation of the network. Each communication link has associated thereto at least one characteristic, such as, for example, a delay, a bandwidth, routing costs or the like.

The topological network information is used as an input for the analyzer 26 which is operable to provide required information on the topology of the network, as it may be achieved by a transformation of the topology 30 of the network provided to the input interface 22. An example of such a transformation or a visualization of the required information on the topology of a communication network 32 is illustrated on the right side of the network topology analyzer 20, that is, at an output interface 28 of the same.

Generally speaking, the network topology analyzer 20 provides at its output 28 information on the topology of a communication network 32 which may, just as an example, be a further graph of the topology in which individual nodes have been filtered out according to some filter characteristics.

The network topology analyzer 20 further comprises a user input interface 24 which is operable to receive user preference information or user specific rules, the user preference information being indicative of a topology representation requested by the user. That is, according to the embodiments of the present invention, the processing of the topological network information by the analyzer 26 can be influenced or configured by a user via the user input interface 24 so that the representation 32 as output by the network topology analyzer may correspond to required information on a topology of the communication network.

It is to be noted that, although the topology of the network is illustrated by a graph within this specification, the embodiments of the present invention are by no means understood to be restricted to the provision of a graph or the like. To the contrary, all possible illustrations or representations of information on a topology of a communication network may be provided at an output 28 of a network topology analyzer.

According to the embodiment illustrated in Fig. 2, the analyzer comprises a processing pipeline consisting of numerous modules, as for example modules 26a to 26c illustrated in Fig. 1, which consecutively process or transform topological network information in order to arrive at the required information on the topology of the communication network at an output of the pipeline, i.e. at an output of the analyzer 26. Particular ways to modify or configure the processing of the analyzer are, for example, changing the processing order of the modules 26a to 26c, providing user-defined scripts, defining a particular processing of the topological network information within one of the modules or within the whole pipeline, providing configuration parameters for a predetermined processing scheme or filter, selecting one of a group of predetermined processing schemes or the like. In summary, Fig. 2 illustrates how programmability may be achieved in the pipeline. First, by configuration, a user can decide about the execution order and parameterization of pipeline components. Second, by programming, the user can create of modify one or more modules so that it process the network topology according to its needs, e. g., according to user-specific rules. The former method may be easier to use, while the latter approach may allow more flexibility. An embodiment of the invention may decide only to implement one of both variants. In any case, the objective may be to set up a pipeline that extracts the view that is needed or desired by a given user from a given in-put network topology.

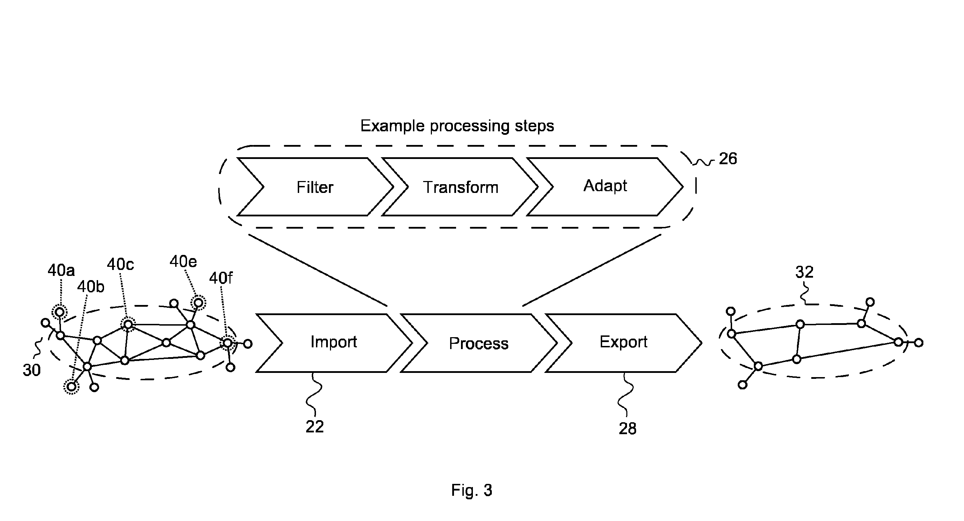

Fig. 3 illustrates a particular example how a pipeline may process data or metadata that is specific for a topology of a communication network. For instance, if an application such as a CDN only has sites at a subset 40a to 40f of the nodes inside a network topology, or if a VPN only maps to a subset 40a to 40f of the network graph, only the subset 40a to 40f of the network topology given by such metadata may be of concern. In such a case, an important processing step of the graph processing pipeline of an analyzer 26 may be to filter out the relevant part of the network topology and to present it to the user (which could be the CDN, the VPN customer, or any overlay application) in an adapted way. For instance, metadata may be taken into account for the creation of an application or user-specific view on the topology of a communication network. Again, network topology may be represented as a graph and processed by several, modular, concatenated components. Each component can be subdivided recursively into further processing steps, which could also include processing loops (not shown). A typical processing pattern for network topology abstraction is to filter out a relevant part of the network topology (e. g., all nodes that matter for a CDN), to transform the graph subsequently (e. g., remove all other nodes), and to adapt the result according to the needs (e.g., to re-calculate or normalize the performance costs between the remaining nodes). Some key principles of the graph processing pipeline as illustrated in Fig. 3 may be modularity and re-usability of components. It is important to emphasize that the pipeline is not necessarily executed once only. The pipeline is also executed if the network topology changes, in order to dynamically adapt the output according to the actual network state.

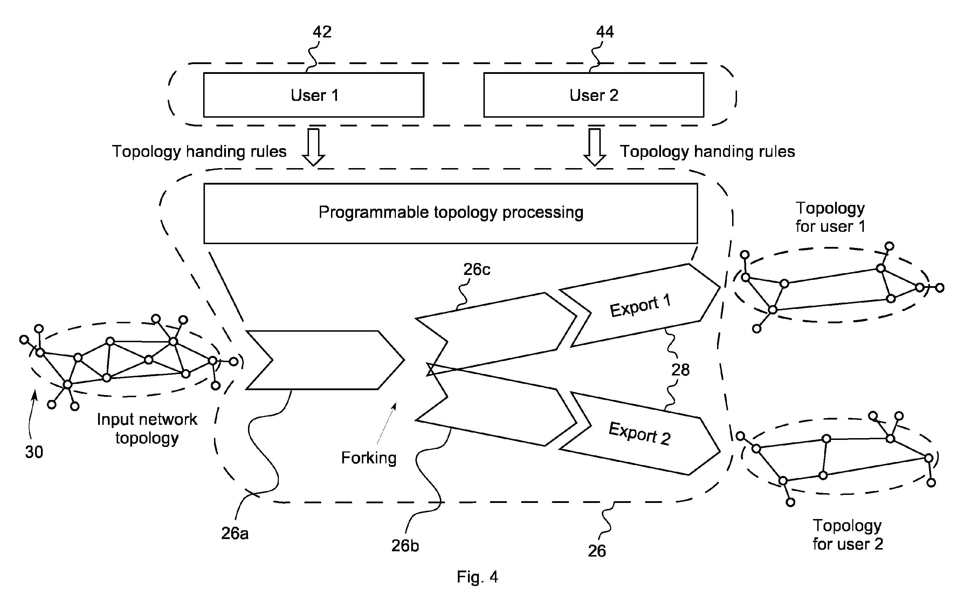

A particular implementation of an embodiment of the present invention is illustrated in Fig. 4, where processing or computational power of the analyzer 26 may be saved in a multi-user environment. In this particular embodiment, the user input interface receives user preference information for, at least, a first user 42 and a second user 44. In order to save computational resources of the analyzer 26, the analyzer is able to employ "forking" within the processing pipeline, that is, to provide the output of a first module 26a of the pipeline to both the second module 26b and the third module 26c in order to avoid possibly redundant processing or filtering of the topological information.

In other words, Fig. 4 depicts how the system may deal with multi-user environments. By programming the pipeline differently, user 42 and user 44 can obtain different views on or representations of the same network topology 30. It is possible that the pipelines result in two entirely different graphs, with different edges (solid lines indicating communication links), vertices (nodes), labels, and cost values assigned to edges. This is visualized by two different graphs in that Fig. 4, each representing a different information on the topology of the network. It may also be possible, and even desirable, that the graph processing pipelines of different users share certain initial processing steps, because they have then to be calculated only once. This is achieved by configurable or automatically performed "forking" actions inside the pipeline, which duplicates the outcome of a pipeline processing step to create input to two or more follow-up modules of a pipeline. There can be more than one forking operation inside a set of pipelines or in a pipeline. As outlined in Fig. 4 the forking may be also caused by considering application, domain or user-specific metadata.

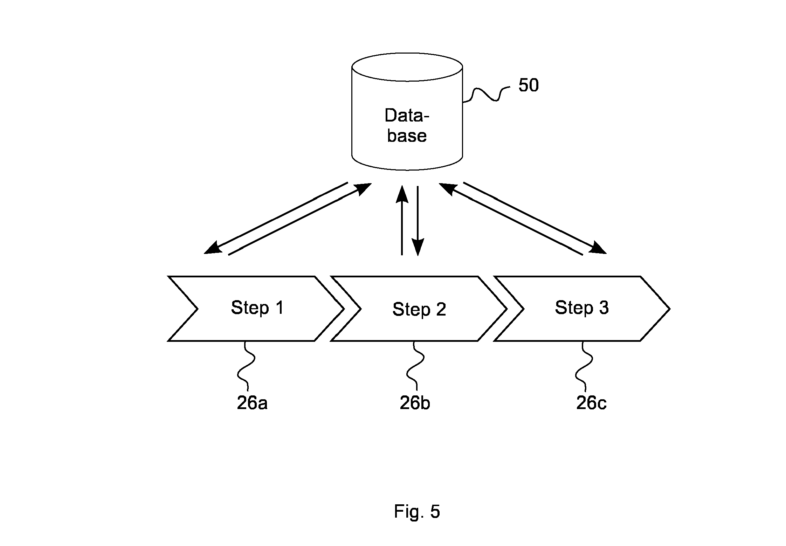

Fig. 5 illustrates in a schematic view how programmability of a particular module or of a complete analyzer, that is, of the processing pipeline, may be achieved in practice, so as to allow for different orders of modules within a pipeline. Fig. 5 gives a first overview of a possible internal realization of a graph processing pipeline in an analyzer 26. It consists of several components or modules 26a, 26b and 26c that execute a certain step. Each component consists of a well-defined interface, most notably, for reading and writing the data representing a network topology. The data is exchanged between subsequent pipeline steps by an appropriate interface. In a more complex embodiment of the invention, this data may, for example, be copied or stored in a database management system 50.

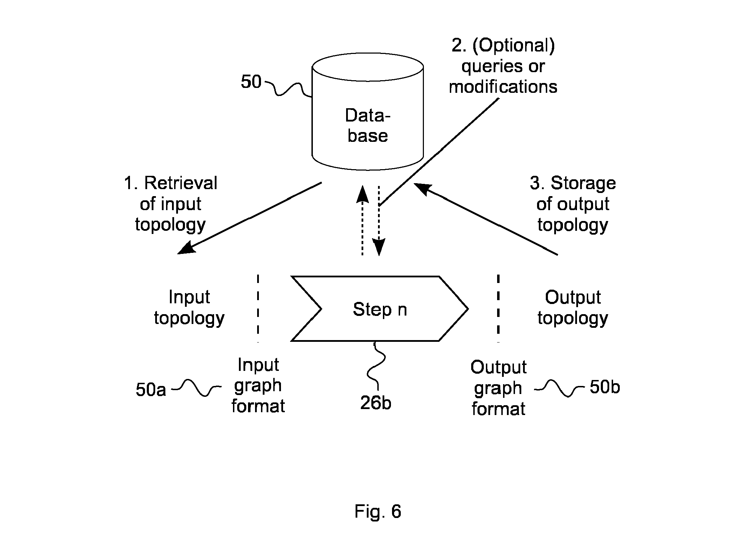

Fig. 6 details the interfaces of a processing step or a module in the pipeline, in this example for module 26b. For modularity, it is important to have a well-defined input format 50a and output format 50b of each component. If several pipeline components are put together, the output of the former step can be used as input of the following step. In a more complex embodiment with a database, the input of each step may be retrieved from the data base 50. The functions and algorithms of one module may change data in the data base 50 as well, subject to data access rules etc. Finally, the output of one module may be written to the data base 50 as well. This kind of logically centralized data storage may facilitate consistency checks, read/write access policies, caching, and error handling. For instance, data base storage 50 may enable roll-back of one or more processing steps failed. In addition, the database storage may also be beneficial for reusing data among several pipelines (e. g., for different users), as illustrated in Fig. 6.

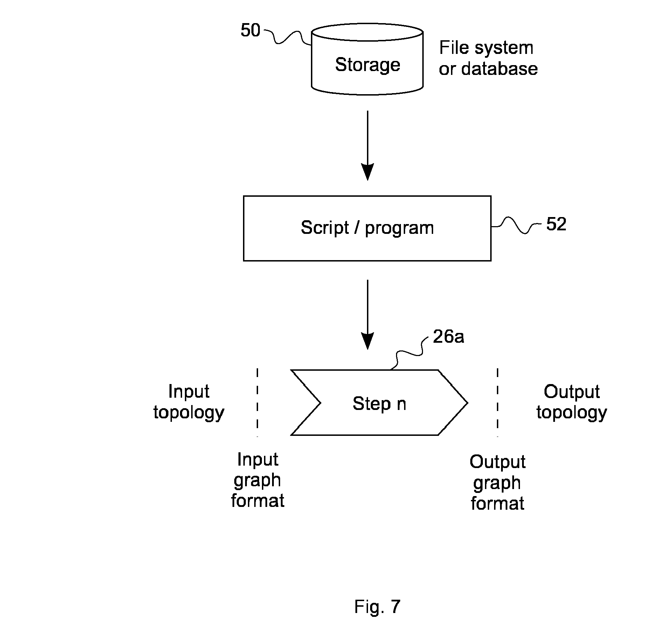

Fig. 7 provides a high-level overview how programmability may be achieved. Either a script 52 or (uncompiled/compiled) program code may be loaded into a pipeline processing, after it has been configured and stored by the user accordingly. The user may have implemented therein a certain data processing function that needs to be executed. That processing might use also functions in a library, e. g., for commonly used algorithms. That concept may be applied to scripts or programs written in any programming or scripting language, including, for example, Java, Python, Groovy, JavaScript, Perl, etc.

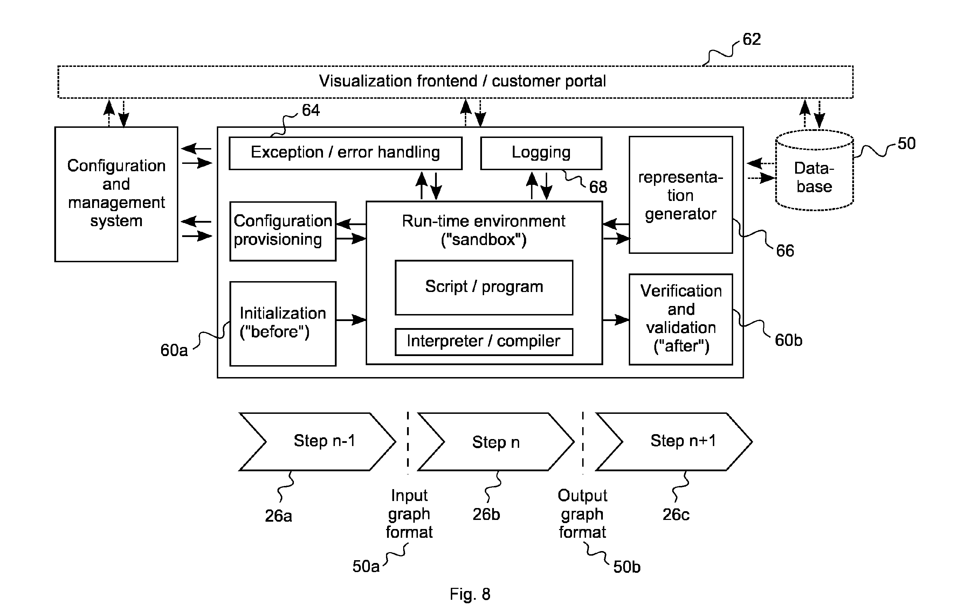

Fig. 8 sketches more in detail some important functions required for programmability. The script or program realizing user-specific functions inside the pipeline may run inside a run-time environment ("sandbox"), using an interpreter or a compiler (e.g. a just-in-time compiler). Specific to some exemplary embodiments of the invention are the following components.

First, two (optional) initialization and verification/validation scripts 60a and 60b may be integrated. The logic in those functions may be a script itself. However, unlike the actual user-specific processing, this logic may be under control of the operator of the overall system, and not by the user. That is, the scripts may, for example, implement an evaluation of the user preference information and/or the requested topology representation with respect to a security policy. This enables e. g. the network provider to ensure that users of the pipeline only get a filtered, consistent view inside what they can program ("initialization"), while it is also possible to perform consistency and error checks ("verification/validation") on the result of the script, in order to prevent an invalid outcome.

Second, the script or program code may be provided via a provisioning and configuration system, which can e.g. be coupled with a portal 62 of the network provider, enabling each user to configure the pipeline, or parts of the pipeline, according to its needs.

Embodiments of the invention may further include a dedicated exception and error handling system 64 in order to deal with exceptions inside the user-specified code. It may separate different classes of exceptions. Some of them may require internal handling by the user-specified code, while others may affect the pipeline module or the pipeline as a whole (e. g., if the graph cannot be processed at all by the script). Finally, interfaces may be provided to a representation generator 66 and for logging 68. In particular that information might also be exposed to users via a portal. The representation generator may also be referred to as a graph storage in some embodiments in which the information on a topology of a communication network is provided as a graph.

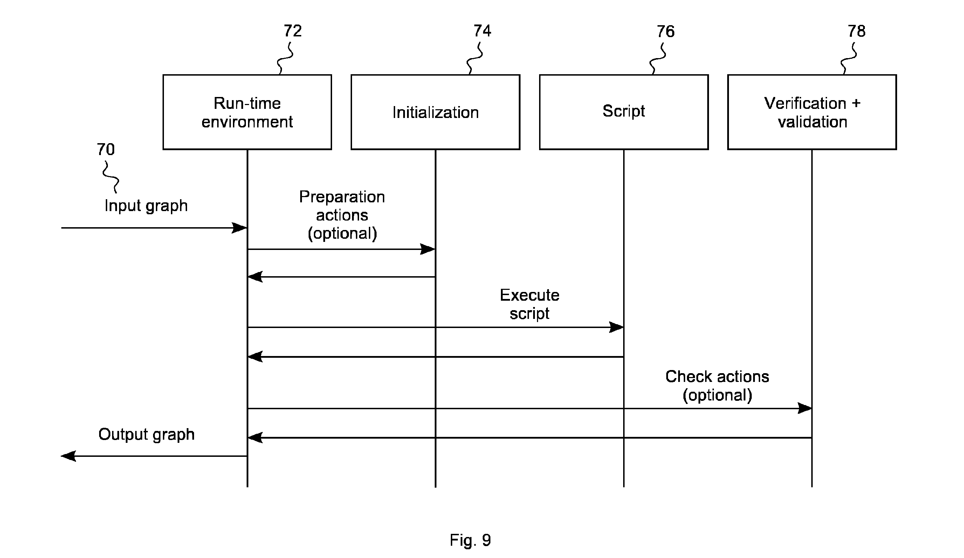

Fig. 9 illustrates a part of the operation within a message-sequence-chart. The pipeline or the analyzer is triggered when input data 70 is available. As mentioned, a run-time environment 72 may then execute (optional) initialization steps 74 to ensure that the user-specified script runs appropriately. Then the user-provided script 76 is executed, which will typically process and modify the network topology data. The outcome is then validated by another (optional) verification step 78. As implied by the use of a pipeline, these steps may be repeated in subsequent pipeline modules, if needed.

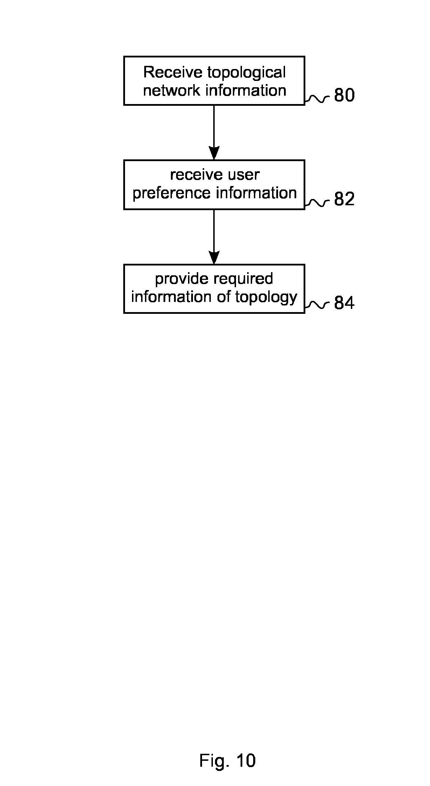

Fig. 10 again illustrates an embodiment of a method for providing required information on a topology of a communication network as a flow chart.

In an input step 80, topological network information related to a characteristic of a communication within the communication network is received.

In a configuration step 82, a user preference information is received, the user preference information being indicative of a topology representation requested by the user.

In an output step 84, the required information on the topology of the network is provided, the providing comprising processing the topological network information based on the user preference information.

Summarizing the above paragraphs, an exemplary embodiment for implementation in an environment as illustrated in Fig. 1 is shown in Fig. 2. For instance, the network topology gathering system, i.e. the network topology analyzer, may be implemented as a network management system or route analytics software. The network topology-aware system could be a CDN or a distributed cloud management system. It can also be an ALTO server that exposes the network topology to other applications by the ALTO interface. The topology processing pipeline processes the input data from the former system and provides it to the latter system.

A rudimentary pipeline is a solution for some use cases. Yet, the key benefits of this invention may be of maximum use in more complex embodiments. For instance, more than one user may require topology information, but with different requirements and constraints. One such user could be a CDN, another user could be a distributed cloud system. Further users may be (operator-internal) traffic engineering or capacity planning applications, or (operator-external) traffic optimization tools, e. g., for peer-to-peer applications. All those users may need a different view on the network topology (and might also be provided different access rights by the operator). This implies that each user may have its own topology processing pipeline that provides the appropriate view, and possibly recalculates this view if the network dynamically changes.

An actual embodiment of the graph pipeline can be realized by a software program, e. g., written in Java. In that case, the pipeline and its internal modules could be objects in a class hierarchy. The storage of the network topology data could be realized in the program memory. An alternative would be a data base management system, which offers persistent storage, transactions, roll-back, etc.

In an embodiment, the script may be written in a high-level programming or scripting language, including Java, Python, Groovy, JavaScript, Perl, etc. This enables users to customize and program the pipeline according to their needs. The system may also offer a set of pre-defined library calls to facilitate important and frequently used tasks.

For information purposes, an example for an actual script that can be used in the system shown in Fig. 7 and 8 is listed below as a pseudo code. It represents a function that normalizes edge costs into a given range. The example assumes that the topology abstraction pipeline supports Groovy code and implements a specific software interface to provide access to the graph data. The actual function shown in this example is just one of an arbitrary number of possible implementations and merely provided to illustrate a function that a user may need, but that might not be available in that form in any given system at design time.
Function: normalizeEdges (graph, property, min, max [ round_to_digits ] )
Groovy script implementation:

```
 def normalizeEdges = {
       graph, property, min, max, round_to = 2 ->
       es = graph.getEdges()
       es.each { e -> p = e.getProperty(property)
               e.setProperty(property, ((p - min) / (max - min)).round(round_to))
       }
 }
```

This invention addresses the question how to provide different, application-specific views on a network topology. For instance, even if a CDN and a cloud computing platform run inside the network of a service provider, their operation will not need the same information and the same level-of-detail, because they will not necessarily run at the same sites, and they may have different optimization objectives. This implies that the network provider has to provide multiple views of its network topology to different applications and/or users.

Conventional monitoring and route analytics solutions are mostly static and not programmable. To some extent, they are tailored to offline analysis of data and statistics, and as such they do not have to define in advance the specific algorithm that is used to process network data. However, resource management in the applications addressed by this invention, such as CDNs and distributed clouds, should be able to adapt to dynamic changes and thus need an online processing of data. It is unlikely that the requirements and policies for different users are known in advance. Also, there is a plethora of metrics and data sources which may have to be processed or correlated, and not always one can assume that the required rules and algorithms are generic. Therefore, a network service provider willing to expose topology should be able to configure and control what information to expose to whom.

In other words, this invention provides a programmable graph processing pipeline, which can be configured and modified at run-time and thus enables user-specific abstraction levels for a network topology. The "user" that programs the system may be the service provider itself, e. g., a part of the same organization. The processing pipeline is then a way to customize the topology exposure system according to the needs of its customers. It is also possible, but more challenging, to offer this programmability as a feature to third-parties outside the administrative domain. Thereby would enable customers of a service provider to control how topology and monitoring data is processed and exported to them, eventually within constraints imposed by the service provider. An example use case would be to program a topology exposure for a Virtual Private Network (VPN) that represents a customer-specific slice of the service provider network. Other examples would be Over-The-Top (OTT) application providers.

This invention proposes a method that enables user-specific processing and exposure of network topology information. This programmability may provide several key advantages.

A first advantage is flexibility and openness. A graph processing pipeline with programmable components enables very different network topology processing algorithms. The algorithms and or policies do not have to be specified at design/compile time, but can be changed afterwards. In contrast to a solution that only supports well-defined policies arbitrary processing steps can be integrated and adapted to the needs of specific networks.

A second advantage is customization. The solution enables different users of a network (e. g., different customers, such as a CDN and a cloud system, or different instances of a CDN) to control how data is gather, process, and exported. Each user can define its own scripts, and gets a corresponding view on the network. Due to the modular structure of the topology processing pipelines, users can re-use existing functions and augment them with customized scripts according to their needs. The system architecture includes initialization, verification and validation steps that ensure data sanity, i. e., that the system produces a valid result.

A third advantage is usability. Many network administrators can be assumed to understand a high-level programming language and should thus be able to use the system. Existing software development tools such as integrated development environments can be used directly, or adapted accordingly. This results in a low barrier for new users to use the system.

In summary, such the graph processing pipeline is a promising solution for all network management and control software that deals with network topology data. The processing pipeline itself is a generic concept that is widely applicable, even without use of programmability by scripts or third-party programs.

Most existing commercial system apparently use static topology information that is either provided manually, or very simple to configure (e. g., geo-databases mapping IP addresses to coordinates without abstraction). If actual network data is gathered, it is hardly filtered or processed by more complex algorithms. This invention addresses systems that need access to real, dynamic network state and that thus need an internal topology processing system with non-trivial functionality, e. g., to abstract the network view. This invention proposes a more flexible solution for processing network topologies, which could be a functional product differentiator compared to other solutions, e. g., other route analytics software, other CDN systems, etc. It is impossible to quantify numerically the benefit of such a feature.

The preceding description and the drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks labeled as "means", "means for ....", "....", etc., may be provided through the use of dedicated hardware, such as "... ", "... ", "a processor", "a controller", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. A network topology analyzer (20) for providing required information on a topology of a communication network (32), comprising:
a network input interface (22) operable to receive topological network information related to a characteristic of a communication within the communication network;
a user input interface (24) operable to receive a user preference information, the user preference information being indicative of a topology representation requested by the user; and
an analyzer (26) operable to provide the required information on the topology of the network, the analyzer being operable to process the topological network information based on the user preference information.

2. The Network topology analyzer (20) according to claim 1, wherein the analyzer (26) is operable to process the topological network information using a processing pipeline comprising at least a first module (26a) and a second module (26b), wherein each module is operable to receive topological network information in a predetermined format at an input of the module and to provide topological network information in said predetermined format at an output of the module so that an order of the modules in the pipeline can be changed.

3. The Network topology analyzer (20) according to claim 2, wherein the user preference information comprises information on a requested order of the first module (26a) and the second module (26b) within the pipeline.

4. The Network topology analyzer (20) according to claims 2 or 3, wherein the analyzer (20) is operable to process the topological network information using a processing pipeline comprising at least an additional third module (26c), wherein a topological network information is provided from an output of the first module (26a) to both, an input of the second module (26b) and an input of the third module (26c).

5. The Network topology analyzer (20) according to any of the preceding claims, wherein the user preference information comprises instructions causing a requested processing of the topological network information by the analyzer.

6. The Network topology analyzer (20) according to claim 5, wherein the analyzer is operable to execute a script (52) as provided as instructions by the user, the script (52) defining a particular processing of the topological network information.

7. The Network topology analyzer (20) according to claim 5, wherein the instructions provide information on a selection of one of a group of predetermined processing schemes offered by the analyzer (26) and/or include at least one configuration parameter for a particular processing scheme.

8. The Network topology analyzer (20) according to any of the preceding claims, wherein the topological network information comprises information on at least two nodes (4a, ... 4m) communicating with each other in a representation of the communication network, wherein the topological network information further comprises information on at least one characteristic of the communication between the nodes.

9. The Network topology analyzer (20) according to claim 8, wherein the information on the characteristic of the communication between the nodes (4a, ... 4m) comprises at least one information related to one of the group of a bandwidth available for a communication between the nodes (4a, ... 4m), a delay caused by a communication between the nodes (4a, ... 4m), a physical distance between the nodes (4a, ... 4m) and a routing cost related to a communication between the nodes.

10. The network topology analyzer (20) according to claims 8 or 9, wherein a node (4a, ... 4m) of a representation of the communication network represents one of the group of a single device within the network, a group of devices, a subnet of the communication network and a segment of the communication network.

11. The Network topology analyzer (20) according to any of the preceding claims, further comprising:
a representation generator (66) operable to provide a graphical representation of the required information on a topology of a communication network, the graphical representation comprising symbols for at least two nodes (4a, ... 4m) communicating with each other in the communication network as well as a graphical representation of a communication link (6a) between said two nodes.

12. The network topology analyzer (20) according to any of the preceding claims, wherein the network input interface (22) is operable to continuously receive topological network information; and wherein the analyzer (26) is operable to continuously provide the required information.

13. The network topology analyzer (20) according to any of the preceding claims, further comprising:
a policy checker (60a, 60b) operable to evaluate the user preference information and/or the requested topology representation with respect to a policy, the policy indicating an allowable information within a representation of the topology of the communications network as provided by the analyzer (26), the policy checker (60a, 60b) preventing information which is not allowable according to the policy to be contained within the representation of the topology provided by the analyzer (26).

14. A method for providing required information on a topology of a communication network, comprising:
receiving topological network information related to a characteristic of a communication within the communication network;
receiving a user preference information, the user preference information being indicative of a topology representation requested by the user; and
providing the required information on the topology of the network, the providing comprising processing the topological network information based on the user preference information.

15. A computer program having a program code for performing the method of claim 14, when the computer program is executed on a computer or processor.
